# FASCICULE DE BREVET EUROPEEN

(11) **EP 1 866 047 B1**
(45) Date de publication et mention de la délivrance du brevet: **13.12.2017**
(21) Numéro de dépôt: 06726223.8
(22) Date de dépôt: 07.03.2006
(51) Int. Cl.: B01D 21/08, B01D 21/24, C02F 1/68, C02F 3/00, B01D 21/00, C02F 1/52

(54) **INSTALLATION DE PURIFICATION D'EFFLUENT A STRUCTURE CENTRALISÉE**
ABWASSERREINIGUNGSANLAGE MIT ZENTRALISIERTER STRUKTUR
EFFLUENT PURIFYING PLANT WITH CENTRALIZED STRUCTURE

(30) Priorité: 16.03.2005 FR 0550670
(43) Date de publication de la demande: 19.12.2007
(73) Titulaire: Beaulieu, Bernard, 07110 Chassiers (FR)
(72) Inventeur: Beaulieu, Bernard, 07110 Chassiers (FR)
(74) Mandataire: Cabinet HERRBURGER
(86) Numéro de dépôt international: PCT/FR2006/050199
(87) Numéro de publication internationale: WO 2006/097650

(56) Documents cités:
- FR-A- 2 216 231
- FR-A- 2 810 310
- US-A- 5 407 584

## Description

### Domaine de l'invention

La présente invention concerne une installation de purification d'effluent à structure centralisée comprenant, sur un axe vertical,
- une cuve d'homogénéisation recevant l'effluent additionné d'un agent coagulant ou floculant,
- une cuve de clarification sous la cuve d'homogénéisation,
- un bac de floculation comprenant une partie supérieure tronconique prolongée d'une partie inférieure, placé à l'intérieur de la cuve de clarification et dans lequel se forment des flocons de boues,
- un conduit disposé dans l'axe, descendant, reliant la cuve d'homogénéisation à la partie basse du bac de floculation que l'effluent traverse de bas en haut et se clarifie au contact des flocons de boues,
- le conduit comprenant un tube supérieur dont une extrémité débouché dans la cuve d'homogénéisation et l'autre extrémité débouche dans un tube inférieur de diamètre plus grand que celui du tube supérieur, l'extrémité inférieure de celui-ci débouchant dans la partie basse du bac de floculation,
- la partie inférieure de la cuve de clarification ayant une partie tronconique formant la cuve à boues qui reçoit lés boues débordant du bac de floculation,
- une cuve annulaire entourant la cuve de clarification et recevant l'eau filtrée par surverse de la cuve de clarification.

Une telle installation est déjà connue selon le document FR 00 07 42 (FR 2 810 310). Les documents US5407584 et FR2216231 font également la partie de l'état de l'art intérieur.

### But de l'invention

La présente invention a pour but de développer une installation de purification d'effluent du type défini ci-dessus permettant une meilleure gestion du flux dynamique par une meilleure répartition et utilisation de l'injection de l'agent coagulant, une accélération du phénomène de coagulation en évitant une floculation prématurée dans la bac de mélange, ou que le lit de boues ne gène la floculation et en évitant de perturber la floculation par la remontée du liquide clarifié tout en permettant également un traitement bactériologique du liquide clarifié et ceci avec des moyens très compacts occupant la surface minimale au sol.

### Exposé et avantages de l'invention

A cet effet, l'invention concerne une installation de purification d'effluent à structure centralisée du type défini ci-dessus dans laquelle
- la cuve d'homogénéisation comporte une arrivée tangentielle de l'effluent, caractérisée en ce que
- l'entrée et la sortie du tube supérieur comportent un guide hélicoïdal de mise en rotation de l'effluent,
- le tube inférieur de diamètre supérieur à celui du tube supérieur se termine par une sortie en forme de cône renversé de section réduite,
- la partie inférieure du bac de floculation est tronconique, d'angle au sommet, inférieur à celui de sa partie supérieure, cette partie inférieure étant parallèle au cône de la sortie du tube inférieur, et
- au moins un cône anti-refoulement entoure le conduit dans la cuve de clarification.

De façon générale, l'installation selon l'invention permet une excellente gestion des flux et cela quelle que soit la nature des effluents, ce qui simplifie considérablement la mise au point de l'installation et son utilisation tout en réduisant les frais de fonctionnement et la consommation d'agents coagulants et floculants.

Grâce à la répartition de l'effluent et au point d'injection de l'agent coagulant et/ou floculant, notamment en injectant le floculant en mont d'un mélangeur statique et grâce à une arrivée tangentielle dans la cuve d'homogénéisation, on répartit plus efficacement l'agent floculant et donc de réduire les quantités consommées. Les moyens de l'invention permettent de maintenir le liquide en rotation sur lui-même par effet de vortex, ce qui évite tout dépôt intempestif de flocons susceptible de colmater des parties de l'installation. Les flocons de boues se déposent dans la cuve à boues sans gêner la remontée du liquide ni perturber la floculation en aval.

Le fond de la cuve de floculation favorise la circulation et la remontée de l'effluent chargé d'agents floculants de façon que les flocons de boues se développent, remontent vers la partie supérieure de la cuve de floculation et passent ensuite dans la cuve à boues soit par débordement soit par des orifices prévus à cet effet.

Le ou les cônes anti-refoulement favorisent également la floculation et le dégagement des flocons de boues vers la cuve à boues en évitant que les flocons de boues ne se regroupent au centre de l'installation et colmatent progressivement celle-ci en se développant vers l'extérieur.

Suivant une autre caractéristique avantageuse, un second cône anti-refoulement est disposé au-dessus de la cuve de floculation et ce second cône est réglable. Ce réglage permet d'adapter l'effet de ce cône anti-refoulement aux caractéristiques physico-chimiques de l'effluent.

Le ou les cônes anti-refoulement favorisent également la circulation préférentielle de l'eau d'abord chargée de flocons de boues puis de l'eau clarifiée, dans la partie au-dessus de la zone de formation et de retenue des flocons de boues. Cette eau clarifiée est ensuite répartie de manière poussée à la surface de la masse filtrante pour éviter toute formation de passage préférentiel à travers la masse filtrante.

Suivant une autre caractéristique avantageuse,
- la sortie de la cuve de clarification comporte des chicanes de stabilisation du liquide et une répartition périphérique d'orifices de sortie,
- la cuve annulaire entourant la cuve de clarification contient une masse filtrante en partie supérieure, sa partie inférieure constituant le volume de stockage de l'eau filtrée.

Grâce aux chicanes, la régulation du débit et l'uniformisation de la répartition des flux vers la masse filtrante permettent d'éliminer au moins 95 % des matières résiduelles en suspension.

Suivant une autre caractéristique avantageuse, la conicité de la partie supérieure de la cuve de floculation est supérieure à celle de sa partie inférieure.

Cette forme doublement tronconique évite l'accumulation de boue dans les angles du tronc de cône inférieur et le liquide s'accélère le long de la paroi extérieure. Puis, la forme tronconique plus évasée dirige le flux vers l'extérieur en contournant la zone de liquide stagnant autour du conduit et sous le cône anti-refoulement.

Suivant une autre caractéristique avantageuse, le tube inférieur est en forme de deux troncs de cône assemblés par leur grande base, la section d'entrée correspondant à celle du tube supérieur pour aller en s'évasant et un moyen d'injection injecte un agent floculant au milieu de ce volume.

Cette réalisation est particulièrement avantageuse dans le cas d'effluents faiblement chargés comme par exemple de l'eau de rivière à transformer en eau potable.

Le double cône avec une partie centrale large au niveau de laquelle est injecté l'agent floculant permet de bien mélanger l'agent floculant et l'effluent pour que la floculation se fasse dans cette enceinte limitée dans laquelle la vitesse de passage de l'effluent est réduite, l'effluent étant toujours en rotation autour de l'axe de l'installation.

La floculation est pratiquement terminée à la sortie de ce double cône. Ensuite, lors de la remontée du flux dans la cuve, les flocons se regroupent pour être déposés dans la cuve à boue.

Suivant une autre caractéristique avantageuse, un moyen de dosage du ou des réactifs en amont de la cuve d'homogénéisation et ce moyen de dosage est suivi d'un mélangeur statique.

Suivant une autre caractéristique avantageuse, la cuve annulaire se compose d'une partie inférieure entourant la partie inférieure de la cuve de clarification et une partie supérieure contenant la masse filtrante installée au-dessus et dans le prolongement de la cuve de clarification et ayant la même paroi extérieure, ces deux parties étant reliées par une conduite, un canal annulaire entourant le conduit pour relier le volume supérieur de la cuve de clarification à des rampes de ruissellement débouchant au-dessus de la masse filtrante.

Cette solution est particulièrement avantageuse pour la compacité de l'installation et le volume disponible pour recueillir l'eau traitée.

Le liquide nettoyé qui remonte dans le canal annulaire circule à une vitesse extrêmement réduite. De plus, un cône placé à l'entrée de ce canal annulaire évite que les éventuels flocons de boue qui pourraient flotter au niveau de la paroi supérieure de la cuve de floculation, ne risquent de passer dans ce canal annulaire. Ainsi, ce cône a non seulement un effet de séparation et de retenue mais également un effet de guidage créant une circulation très lente comme un refouloir, de façon que les flocons nageant éventuellement dans la partie supérieure de ce volume, soient redirigés vers le bas et descendent progressivement dans la cuve à boue en s'agglutinant à des éventuels autres flocons de boue.

Dans le cas de ce perfectionnement, de façon avantageuse, une chambre collectrice qui sépare la partie supérieure du volume supérieur de la cuve de clarification, cette chambre collectrice étant reliée à la partie inférieure par une conduite munie d'une vanne.

Il est également intéressant de traiter l'effluent par un pré-traitement avant de l'introduire dans l'installation proprement dite décrite ci-dessus pour éviter de solliciter cette installation de manière excessive.

A cet effet, l'installation comporte une cuve de pré-traitement annulaire, entourant la cuve externe, et composée d'un volume inférieur dans lequel arrive l'effluent additionné d'un agent coagulant et/ou floculant pour y déposer les flocons de boues et d'un volume supérieur dans lequel remonte le liquide partiellement clarifié pour être transféré dans la cuve de répartition.

En particulier, la cuve de pré-traitement annulaire comporte un bac de floculation formé d'un plateau annulaire muni de cavités tronconiques bordées d'orifices de passage, une conduite venant d'une chambre de répartition d'effluent débouchant dans chaque cavité, et le volume inférieur est bordé par un fond en forme de couronne annulaire constituant la cuve de stockage de boues.

Suivant une autre caractéristique, le volume inférieur de la cuve est séparé de son volume supérieur par une cloison munie d'orifices dont l'entrée est délimitée par des cônes divergents, ces orifices étant décalés angulairement par rapport à la position angulaire des cavités de floculation pour occuper chaque fois une position intermédiaire.

Ce pré-traitement avec décantation permet non seulement d'éliminer une partie importante de la charge de l'effluent mais surtout cette élimination facilite le traitement de l'effluent par la partie centrale de l'installation déjà évoquée ci-dessus car ainsi les effluents arrivant dans cette partie centrale auront tous des caractéristiques sensiblement voisines.

L'installation permet aussi un traitement bactériologique du liquide en sortie de la partie de décantage et de filtrage et pour cela, l'installation comporte une partie complémentaire de traitement bactériologique composée d'une succession de chambres annulaires entourant la cuve externe et recevant le liquide nettoyé qui traverse, ces chambres reliées en cascade par des conduites de communication, étant munies de guides hélicoïdaux de mise en rotation de la veine de liquide et des particules en suspension constituant la charge de chaque chambre, les conduites de communication étant des tubes en forme de U dont la branche d'entrée est tournée vers l'aval dans la chambre amont pour déboucher par une sortie tournée vers l'aval dans la chambre annulaire suivante, selon le sens de circulation du liquide dans ces chambres.

L'efficacité de l'installation de traitement bactériologique permet une réduction importante des matières utilisées et par suite une réduction du coût de fonctionnement de l'installation.

### Dessins

La présente invention sera décrite ci-après de manière plus détaillée à l'aide d'exemples de réalisation représentés schématiquement dans les dessins annexés dans lesquels :
- la figure 1 est une vue en coupe axiale d'un premier mode de réalisation d'une installation de purification d'effluent,
- la figure 2 montre une première variante de l'installation de purification d'effluent, notamment pour la production d'eau potable,
- la figure 3 est une vue en coupe analogue à celle des figures précédentes d'un autre mode de réalisation d'une installation de purification d'effluent comportant une partie de traitement préalable,
- la figure 3A est une vue en coupe axiale simplifiée montrant la partie de traitement préalable de la variante de la figure 3,
- la figure 3B montre en vue de dessus le plateau annulaire supportant les bacs de floculation,
- la figure 3C est une vue de dessus du plateau annulaire séparant le volume inférieur du volume supérieur de la cuve annulaire extérieure,
- la figure 4 est une vue en coupe axiale d'un autre mode de réalisation d'une installation de purification d'effluent équipée non seulement de la partie de pré-traitement mais également d'un moyen de traitement bactériologique,
- la figure 4A est un extrait de la figure 4 montrant la partie de traitement bactériologique de l'installation,
- la figure 4B est une vue partielle de la liaison entre deux chambres annulaires de la partie de traitement bactériologique du mode de réalisation de l'installation de purification d'effluent selon la figure 4.

### Description de modes de réalisation

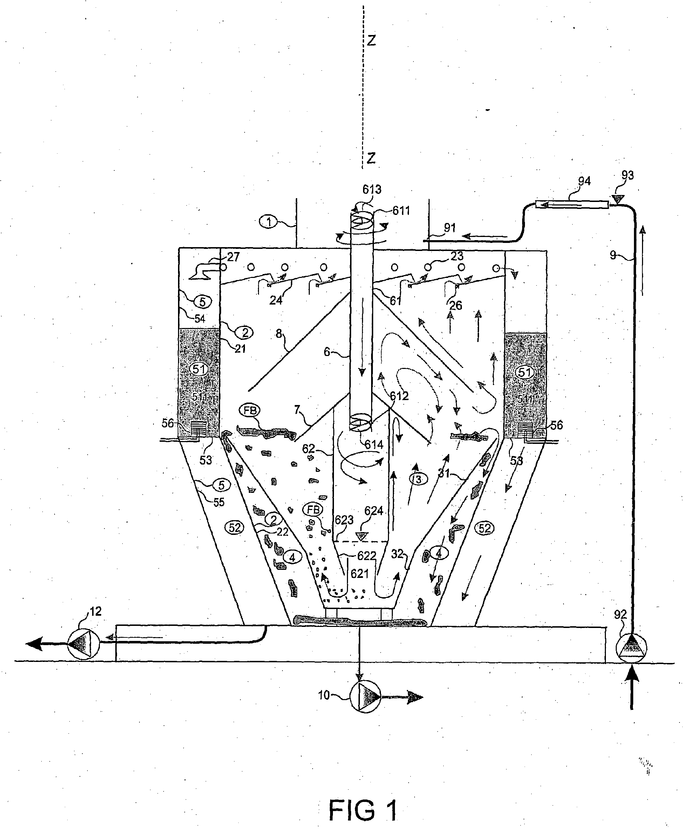

Selon la figure 1, l'invention concerne une installation de purification d'effluent à structure centralisée. Cette installation répartie schématiquement autour d'un axe vertical ZZ, de préférence suivant une symétrie de rotation, se compose d'une cuve d'homogénéisation 1 recevant l'effluent à traiter. Sous cette cuve d'homogénéisation, il y a une cuve de clarification 2 dans laquelle se trouve un bac de floculation 3 et l'intervalle subsistant entre la cuve de clarification 2 et le bac de floculation 3 constitue la cuve à boues 4, la partie supérieure 21 formant le volume de clarification proprement dit ; autour de la cuve de clarification 2, une cuve annulaire 5 reçoit l'eau filtrée par surverse de la cuve de clarification 2. Un conduit plongeur 6 disposé dans l'axe ZZ, descend à travers la cuve d'homogénéisation 1 jusqu'à la partie basse du bac de floculation 3. L'effluent reçoit des agents de floculation et de coagulation. Il circule par effet de rotation dans la cuve d'homogénéisation 1 puis dans la conduite 6 descendant à travers la cuve de clarification 2 et le bac de floculation 3 pour y remonter, dégager des flocons de boues FB et permettre de recueillir l'eau filtrée. La cuve de clarification 2 comporte au moins un cône anti-refoulement 7, 8 entourant le conduit 6 et rabattant les flocons de boues, flottant dans le flux ascendant d'effluent filtré / eau, qui remonte vers le haut 21 de la cuve de clarification 2.

La circulation du liquide (effluent ou liquide filtré, eau filtrée) est indiquée par des flèches non référencées. La circulation se fait soit suivant un trajet plus ou moins droit, soit suivant des flèches courbes indiquant un mouvement de rotation du liquide. Il y a également des mouvements de retournement et de contournement par exemple sous le ou les cônes anti-refoulement 7, 8.

Ces différentes cuves 1, 2, 3 et conduit 6 sont reliés et supportés par des moyens non représentés ni décrits, s'agissant de moyens de constructions habituels. Seule importe la disposition regroupée et centrée autour de l'axe ZZ de façon que l'installation occupe le moins de surface au sol et de volume possible pour une capacité maximale d'effluents et de liquides filtrés.

De manière plus détaillée, l'installation de purification d'effluent présentée en coupe, notamment en coupe axiale à la figure 1, sera explicitée ci-après.

La cuve d'homogénéisation 1 située en partie haute de l'installation, est munie d'une alimentation en effluent 9. La conduite 91 de cette alimentation débouche tangentiellement dans la cuve d'homogénéisation 1 pour y induire un mouvement de rotation du liquide. En amont de la cuve d'homogénéisation 1, la conduite d'effluent 91 venant par exemple d'une pompe 92, comporte un point 93 d'injection de coagulant/floculant. Ce point d'injection 93 est suivi d'un mélangeur statique 94 en forme de chambre qui ralentit le débit de fluide par augmentation de la section pour favoriser le mélange entre l'effluent et les agents coagulants/floculants injectés.

La cuve de clarification 2 qui se situe sous la cuve d'homogénéisation 1, a également une forme symétrique en rotation par rapport à l'axe ZZ. Cette cuve 2 se compose globalement d'une partie supérieure 21 sensiblement cylindrique, circulaire, et d'une partie inférieure 22 tronconique.

La partie inférieure 22 loge le bac de floculation 3 et la partie supérieure 21 formant le volume assurant la fonction de clarification proprement dite, loge un et, de préférence, deux cônes anti-refoulement 7, 8. L'un (7) de ces cônes est fixe, l'autre (8) est réglable. Ces deux cônes 7, 8 sont centrés sur l'axe ZZ et entourent le conduit d'effluent 6 descendant de la cuve d'homogénéisation 1 jusque près du fond du bac de floculation 3.

Le bac de floculation 3 n'est pas jointif par son bord supérieur de son côté 31 avec le côté de la partie inférieure 22 de la cuve de clarification 2 mais laisse un intervalle et un volume annulaire ainsi qu'un volume inférieur sous le bac de floculation 3 (celui-ci repose sur des pieds dans la cuve de clarification) pour former une chambre de collecte de boues ou cuve à boues 4. Le fond de cette cuve 4 est relié à une pompe d'évacuation de boues 10. Cette pompe 10 est commandée ou programmée pour évacuer les boues suivant leur accumulation ou de manière périodique.

Le conduit d'effluent 6 est, de préférence, installé suivant l'axe ZZ, c'est-à-dire suivant l'axe de symétrie de la structure de l'installation. Ce conduit descendant 6 se compose d'un premier tube 61 débouchant dans la cuve d'homogénéisation 1 en remontant dans celle-ci de façon à y délimiter un volume annulaire favorisant la mise en rotation de l'effluent arrivant et tournant dans la cuve d'homogénéisation 1.

Ce tube supérieur 61, descend à travers la partie supérieure 21 de la cuve de clarification 2 pour rejoindre un tube inférieur 62 faisant partie de ce conduit 6. Le tube inférieur 62 débouche près du fond du bac de floculation 3. Le tube inférieur 62 prolonge le tube supérieur 61 et a un diamètre nettement supérieur à celui du tube supérieur. Tant à son entrée 611 dans la cuve d'homogénéisation 1 qu'à sa sortie 612 dans le tube inférieur 62, le tube supérieur 61 comporte chaque fois un guide hélicoïdal 613, 614 en forme d'aube, intégré dans l'extrémité du tube 61 de manière à communiquer une impulsion de rotation à l'effluent qui passe par le tube supérieur 61.

Ce mouvement de rotation de l'effluent se poursuit à travers le tube inférieur 62 qui se termine par une sortie rétrécie 621 constituée par un tronc de cône dont le sommet est tourné vers le bas. Au niveau de la base du tronc de cône 622, le tube inférieur 62 comporte un support 623 muni d'un point d'injection d'un agent floculant 624.

Le bac de floculation 3 dans lequel débouche le conduit 6 et, plus précisément, son tube inférieur 62, symétrique en rotation est formé par la combinaison de deux formes tronconiques 31, 32, une partie supérieure tronconique 31 très évasée et une partie inférieure tronconique 32 moins évasée. Le tronc de cône 622 terminant la partie inférieure du tube inférieur 62 du conduit 6 et le tronc de cône 32 constituant la partie inférieure du bac de floculation 3 sont de préférence parallèles, de façon à régulariser le flux sortant de l'orifice 622 du tube 62 pour remonter dans le bac de floculation. En revanche, le tronc de cône supérieur 31 du bac de floculation 3 est très largement évasé, de façon à ralentir la vitesse d'écoulement du flux montant pour favoriser la formation de flocons de boues qui se regroupent et remontent progressivement, entraînés par le liquide du bac de floculation. Puis, les gros flocons FB de boues passent par-dessus le bord du bac 3 et comme la vitesse du liquide à cet endroit est très faible, les flocons descendent dans la cuve à boues 4 et s'accumulent au fond.

L'un (7) des cônes anti-refoulement se situe juste au-dessus du bac de floculation 3. Il s'agit d'une surface tronconique engagée à la fois sur le tube inférieur 62 du conduit 6 et autour de l'extrémité inférieure du tube supérieur 62. Ce cône anti-refoulement 7 a pour fonction de stabiliser l'écoulement d'effluent remontant dans le bac de floculation 3, à proximité de la paroi extérieure du tube inférieur 62.

Le cône 7 crée ainsi un anneau de liquide plus ou moins immobile entourant le tube inférieur de façon que les éventuels flocons qui se trouvent dans cette zone, circulent très lentement et de ce fait ont tendance à redescendre, alors que les flocons entraînés par la circulation du liquide arrivant du conduit 6, passent de manière préférentielle vers la couronne du bac de floculation 3.

Au-dessus de ce premier cône 7, il y a un second cône 8 situé nettement dans le volume supérieur 21 de la cuve de clarification 2, c'est-à-dire le volume de clarification proprement dit, là aussi de manière à stabiliser l'écoulement pour favoriser le mouvement circulaire, montant/descendant des éventuelles veines de liquide nettoyé, pour en éliminer les dernières particules ou flocons de boues. Ce cône 8 est réglable en hauteur dans le volume de clarification 21 de la cuve 2.

Le positionnement vertical du cône 8 est fonction de la densité résiduelle des flocons de boues entraînés dans le flux ascendant de l'eau clarifiée et de réguler la vitesse ascensionnelle du flux dans le but d'obtenir une précipitation des flocons.

Pour le réglage suivant, le type d'effluent à traiter, connaissant le comportement des flocons et suivant le débit à traiter, un préréglage est fait en atelier et le positionnement final se fait in situ après la mise en opérationnelle de l'ensemble de l'installation.

Dans sa partie supérieure 21, la cuve de clarification 2 est munie d'une répartition périphérique d'orifices de surverse 23. Sous ces orifices 23, à l'intérieur de la cuve de clarification 2, on a un ensemble de chicanes 24 très faiblement inclinées. L'eau filtrée qui remonte dans la cuve de clarification 2 passe entre les chicanes 24 puis par les orifices 23.

Pour favoriser la répartition de l'eau filtrée dans la cuve 5, les orifices d'éjection 23 débouchent chacun de préférence dans un coude 27 terminé par une pomme d'arrosoir de façon à faire goutter ou ruisseler le liquide, sur une surface relativement importante de la masse filtrante 511 et éviter les passages préférentiels.

En effet, la cuve de clarification est entourée par la cuve annulaire 5 dont la partie inférieure 52 permet de recevoir l'eau filtrée et la partie supérieure 51 contient une masse filtrante soutenue par une cloison 53 séparant la partie supérieure 51 et la partie inférieure 52.

La cuve annulaire 5 épouse sensiblement le contour de la cuve de clarification 2. Elle est délimitée par une paroi extérieure dont la partie inférieure 55 est tronconique et la partie supérieure 54, cylindrique.

La cloison horizontale 53 en forme de couronne annulaire est percée de trous pour permettre à l'eau ayant traversé la masse filtrante 511 de descendre dans la partie inférieure 52 d'où elle peut être extraite par une pompe 12.

Les chicanes 24 de la cuve de clarification 2 sont munies de rampes de nettoyage 26 reliées à une source d'eau, par exemple d'eau filtrée, et sous la masse filtrante 511, au-dessus de la cloison 53, des crépines 56 permettent d'injecter l'eau, le cas échéant, chargée de gaz pour nettoyer la masse filtrante 511 par circulation inversée.

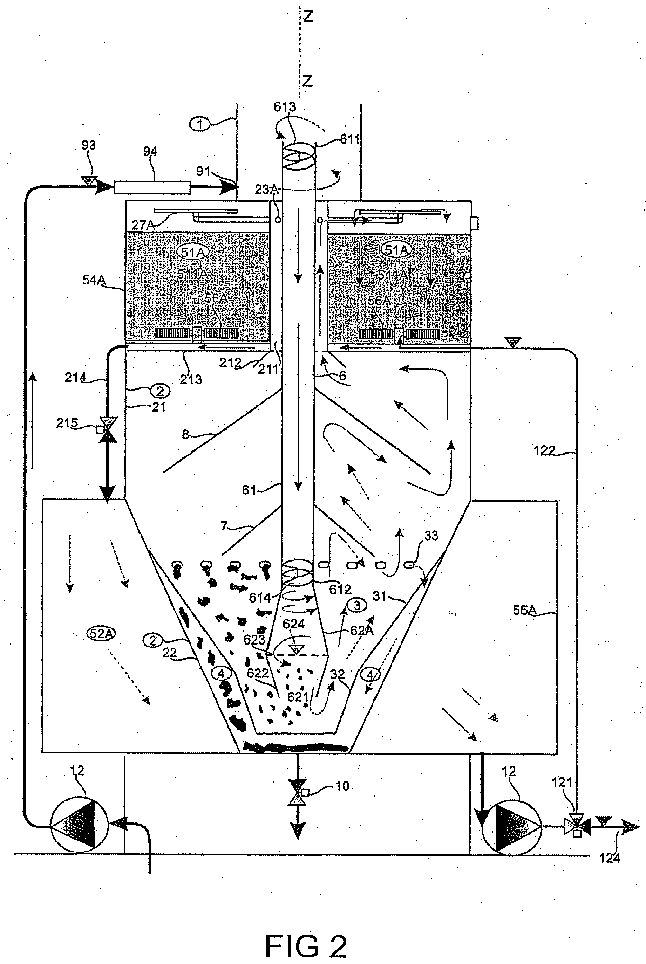

La figure 2 montre une première variante de l'installation de la figure 1. Cette variante reprend les principaux éléments du premier mode de réalisation et ces éléments portent les mêmes références sans que leur description ne soit reprise de manière détaillée. Les éléments analogues mais propres à cette variante porteront les mêmes références complétées du suffixe A.

Ainsi le tube inférieur 62A du conduit 6 est formé par une partie évasée en tronc de cône à laquelle est relié en position inversée le tronc de cône 622 ; ces deux troncs de cône réunis par leur grande base comportent au niveau de la jonction, le support 623 muni du point d'injection d'agent floculant 624.

Le bac de floculation 3 a la même forme que celui du premier mode de réalisation sauf que près de son bord supérieur, il comporte des orifices 33 pour le passage des flocons de boues qui ne passeront plus par-dessus le bord supérieur. Ces orifices 33 débouchent dans la cuve à boues 4 formée comme précédemment entre le bac de floculation 3 et la partie inférieure 22 de la cuve de clarification 2. L'extraction des boues se fait là encore par une pompe ou une vanne 10 en partie basse de la cuve de boues 4.

Les principales modifications de cette variante concernent la cuve recevant l'effluent filtré ou eau clarifiée. Cette cuve est divisée en deux parties, une partie supérieure 51A installée au-dessus de la cuve de clarification 2 et dans le prolongement de celle-ci, en partageant avec le volume supérieur 21 de la cuve de clarification 2, la même paroi cylindrique circulaire. La seconde partie ou partie inférieure 52A de la cuve recueillant l'eau filtrée est située en partie basse autour de la partie inférieure 22 de la cuve de clarification. Cette partie inférieure 52A partage avec la cuve de clarification, la paroi 22 commune. Extérieurement elle est délimitée par une paroi cylindrique circulaire 55A avec un fond et un dessus.

Cette partie inférieure 52A est reliée à la pompe 12 de prélèvement du liquide filtré (eau filtrée).

L'alimentation de la partie supérieure 51A de la cuve se fait par un canal annulaire 211, entourant le tube supérieur 61 du conduit 6. Ce canal annulaire 211 a une entrée dans le volume supérieur 21 formée par un cône 212 destiné également à stabiliser les écoulements comme les cônes anti-refoulement 7 et 8. En partie supérieure le canal annulaire 211 comporte des orifices 23A assimilables aux orifices de déverse 23 de la figure 1 qui débouchent dans des rampes de ruissellement 27A répartissant le liquide filtré au-dessus de la masse filtrante 511A. Cette masse filtrante 511A est située au-dessus de la cloison délimitant la chambre collectrice 213 recueillant le liquide filtré à la sortie de la partie supérieure 511A. Cette chambre 213 est reliée par une conduite 214 munie d'une vanne 215, à la partie inférieure 52A. La vanne 215, de préférence télécommandée, permet d'évacuer le liquide en sortie de masse filtrante 511A de manière continue ou discontinue.

Le nettoyage de la masse filtrante 511A se fait à contre-courant ou courant inverse à l'aide de crépines 56A installées à la base de la matière filtrante dans la partie supérieure 51A et alimentées par une conduite 122 venue d'une vanne à trois voies 121 à la sortie de la pompe de puisage 12. Cette vanne 121, normalement reliée à la sortie 124 pour le prélèvement d'eau filtrée, peut être commutée pour renvoyer de l'eau filtrée à travers les crépines 56A et la masse filtrante 511A, cette eau circulant alors en sens inverse étant évacuée par des moyens non représentées.

L'installation ainsi décrite convient tout particulièrement pour la production d'eau potable.

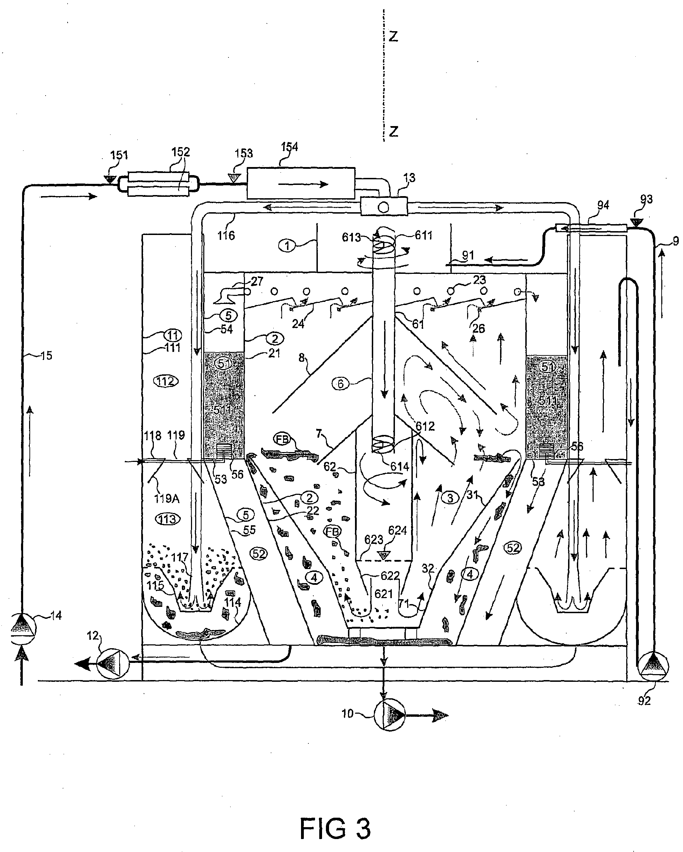

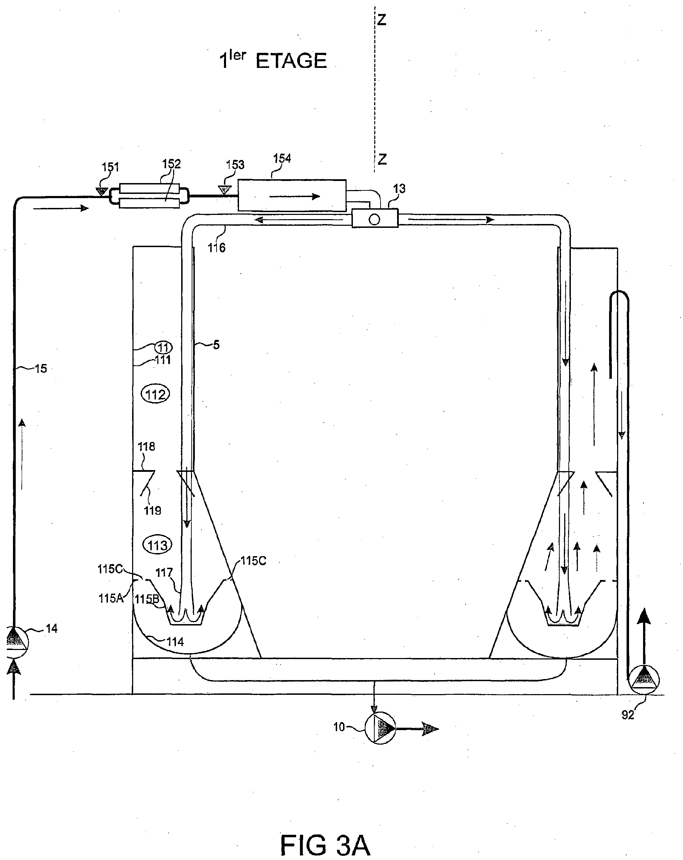

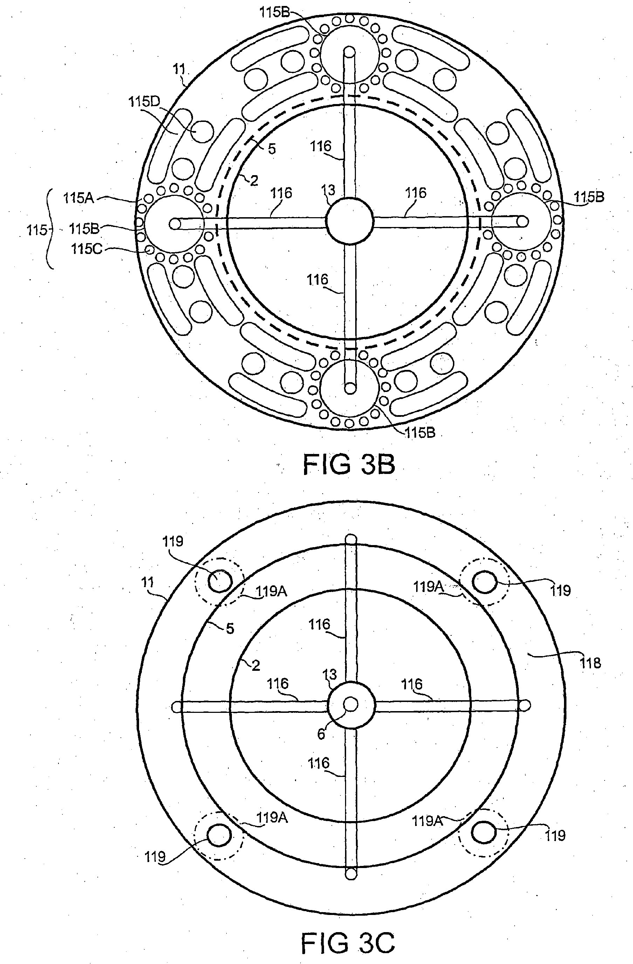

La figure 3 montre une variante de réalisation correspondant pour l'essentiel à la figure 1, complétée par des moyens permettant de faire décanter l'effluent avant son entrée dans l'installation proprement dite par la cuve d'homogénéisation 1.

Ainsi, la structure concentrique de l'installation de purification d'effluent décrite ci-dessus est entourée extérieurement d'une autre structure annulaire formant une cuve externe 11 de pré-traitement et de clarification partielle. Cette cuve externe 11 annulaire est délimitée par une paroi 111 cylindrique circulaire, extérieure, formant un volume supérieur 112 et un volume inférieur 113, ce dernier profitant de l'augmentation de volume offert à l'intérieur du périmètre circonscrit, grâce à la forme en tronc de cône de la partie inférieure 55 de la chambre annulaire 5 entourant la cuve de clarification 2.

La cuve annulaire extérieure 11 permet de décanter une partie importante des matières solides sous forme de boues ou de flocons et pour cela, son volume inférieur 113 est délimitée par une couronne annulaire 114 formant le fond de cette cuve annulaire extérieure. Au-dessus de cette couronne annulaire 114, par exemple de forme torique et de section semi-circulaire, il y a un bac de floculation 115 formé par un plateau annulaire 115A muni de cavités tronconiques 115B, dans lesquels débouchent des conduites descendantes 116. Ces cavités tronconiques 115B sont bordées d'orifices 115C par lesquels les flocons de boues descendent dans la cuve à boues 114. Dans un but de simplification, ces différents moyens seront appelés : bac de floculation 115. Les conduites 116 sont reliées en partie supérieure de l'installation à une cuve de répartition 13, elle-même alimentée en effluent par une pompe 14 et une conduite 15 avec, de préférence, un point d'injection 151 d'agent coagulant, suivi d'une chambre formant un mélangeur statique 152, ensuite un point d'injection 153 d'agent floculant, suivi également d'une chambre formant un mélangeur statique 153 pour déboucher dans la cuve de répartition 13. Plusieurs conduites 116 partent de cette chambre de répartition 13 suivant des directions radiales pour descendre jusqu'au fond du bac de floculation 115 par une forme de conduite légèrement divergente 117 de manière à ralentir la vitesse de l'effluent.

A ce niveau, il se produit une floculation importante, pouvant représenter de 30 à 40% des boues en suspension dans le liquide à nettoyer. Ces boues débordent du bac de floculation 115 pour arriver dans la cuve de stockage de boues 114 formé par la couronne annulaires d'où ces boues sont pompées.

L'alimentation en effluent est assurée par la pompe 14 et l'extraction de l'eau purifiée se fait par la pompe 12. La pompe de relevage 92 assure la reprise de l'effluent ayant subi la première décantation de ses flocons de boues dans la cuve annulaire extérieure 11. L'effluent arrivant dans la partie inférieure 113 de cette cuve annulaire 11 remonte pour passer dans le volume supérieur 112 formant la chambre tampon, annulaire, située au-dessus de la cloison 118 divisant la cuve annulaire extérieure 11. La communication entre ces deux volumes annulaires se fait par des orifices 119 répartis dans la cloison 118 et dont l'entrée est précédée d'un cône divergent 119A.

Le nettoyage de la masse filtrante 511 de la chambre annulaire 5 recevant l'eau filtrée se fait par envoi d'eau filtrée dans la direction inverse de la direction normale de passage de l'eau à travers la masse filtrante. Cette eau est introduite, en partie basse au niveau de la cloison inférieure 53 par les crépines 56. L'eau ainsi injectée pour nettoyer la masse filtrante 511 est, de préférence, de l'eau récupérée dans la zone de stockage d'eau filtrée. Cette alimentation en eau se fait de préférence par la même pompe que celle qui extrait l'eau filtrée de l'enceinte 52. Un système de vannes permet de faire circuler l'eau de nettoyage de la masse filtrante uniquement à travers cette masse et non pas à travers la cuve d'homogénéisation.

La figure 3A montre isolément le complément de l'installation de la figure 3 par rapport à l'installation de base représentée à la figure 1.

La figure 3B montre de manière plus détaillée la forme du bac de floculation 115 réalisé dans le plateau annulaire proprement dit 115A. Ces cavités tronconiques sont alimentées chacune par une conduite 116 partant de la chambre de répartition 13. Cette vue montre la distribution des orifices 115C autour de chaque cavité 115B pour le passage des flocons de boues sortant de la cavité 115B.

Dans sa partie séparant deux cavités 115B, la couronne 115A est traversée par des passages de forme oblongue et/ou ronde permettant la remontée calme du liquide de la cuve à boues 115.

La figure 3C montre la cuve externe 11 coupée au-dessus de la cloison 118 laissant apparaître celle-ci ainsi que les orifices 119 bordés par les cônes d'entrée 119A. La figure montre également les conduites 116 soulignant le décalage angulaire entre d'une part ces conduites,116 (les cavités 115B associées mais non représentées dans cette figure) et d'autre part les orifices 119 occupant des positions intermédiaires.

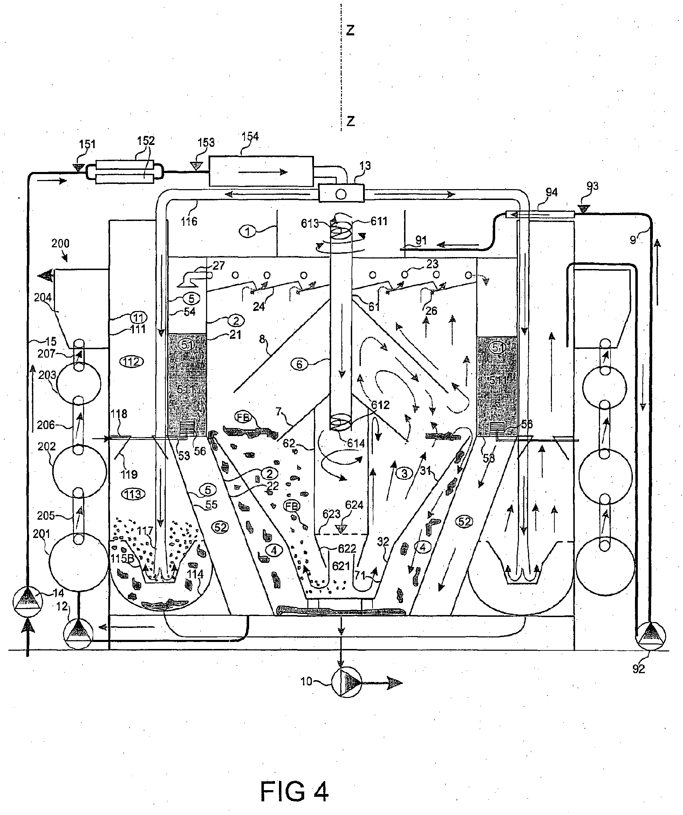

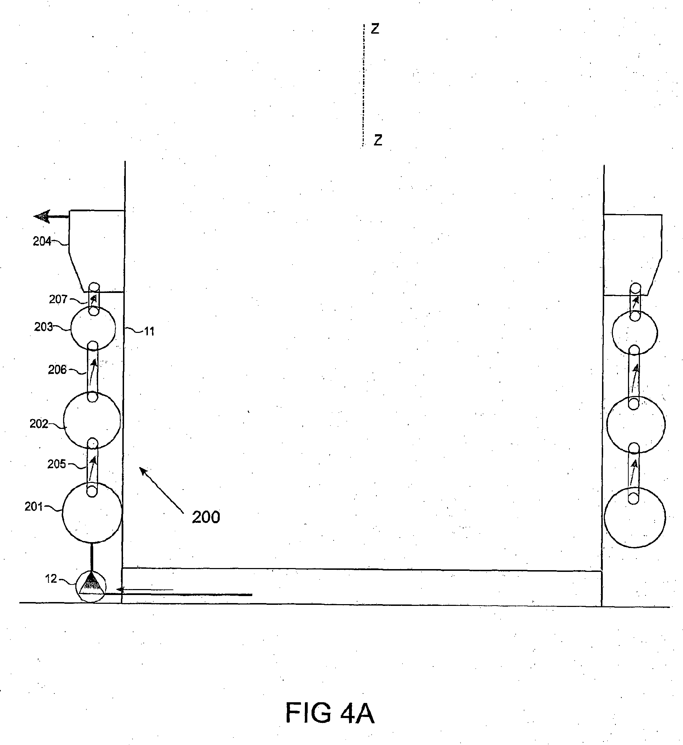

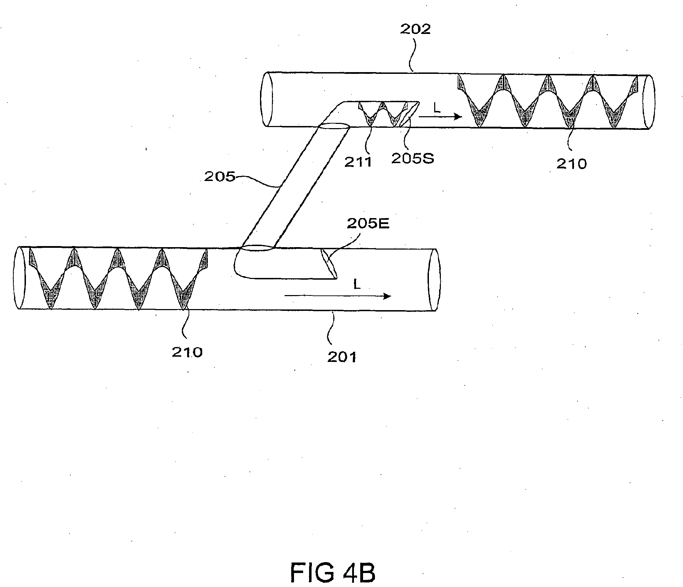

La figure 4 montre une autre variante de l'installation de la figure 1 ou de celle complétée de la figure 3 avec en plus des moyens de un traitement bactériologique de l'effluent filtré, en sortie de l'installation de la figure 3. Comme ci-dessus, les éléments identiques ou analogues à ceux déjà décrits portent les mêmes références et leur description ne sera pas refaite.

La partie complémentaire rajoutée à l'installation de la figure 3A est représentée isolément pour moitié à la figure 4A.

Cette partie complémentaire 200 se compose d'une série de chambres annulaires ou toriques 201, 202, 203, entourant la cuve extérieure 11 et mises en cascade pour recevoir le liquide purifié venant de la partie inférieure 52 de la cuve 5. Le liquide (eau) est pompé par la pompe 12 mais au lieu d'être fourni à l'extérieur, il alimente la cascade de chambres toriques 201-203 suivant une succession allant de bas en haut. Les chambres toriques comportent des guides hélicoïdaux intérieurs pour communiquer à la veine de fluide un mouvement de rotation autour de son axe de mouvement. Ces chambres contiennent des charges qui restent en suspension du fait de ce mouvement de déplacement et de rotation du liquide qui les traverse. Les chambres communiquent l'une avec l'autre par une conduite de communication 205, 206, 207 en forme de U dont l'entrée est chaque fois tournée vers l'aval selon le mouvement de circulation du liquide (flèche L) et de sa charge de particules dans la chambre annulaire correspondante pour en extraire du liquide en fonction de l'arrivée de liquide non traité dans cette chambre annulaire sans en prélever la charge de particules en suspension et la faire passer dans la chambre suivante.

Enfin, la dernière chambre 204 située en partie haute, sert au prélèvement du liquide purifié.

La figure 4B montre le détail de la jonction de deux chambres annulaires par exemple les chambres 201, 202 par une conduite 205 en forme de U dont l'entrée 205E débouche dans la chambre 201 tournée vers l'aval dans le sens de circulation du liquide représenté par la flèche L à l'intérieur de cette chambre 201. En amont de l'entrée 205E, la chambre 201 comporte un guide hélicoïdal 210 en forme d'insert destiné à communiquer à la veine de fluide circulant dans la chambre, une composante de rotation autour de l'axe de la chambre. Plusieurs tels guides peuvent être répartis à l'intérieur de la chambre 201 comme d'ailleurs dans la autres chambres telles que la chambre 202.

La conduite de liaison 205 débouche dans la chambre aval 202 par sa sortie 205S munie également de préférence d'un guide hélicoïdal 211 communiquant au liquide débouchant dans la chambre 202, un mouvement de rotation autour de son axe. Ce mouvement de rotation est amplifié par le guide hélicoïdal 10 qui se trouve en aval.

## Revendications

1. Installation de purification d'effluent à structure centralisée comprenant, sur un axe vertical (ZZ),
- une cuve d'homogénéisation (1) destinée à recevoir l'effluent additionné d'un agent coagulant ou floculant,
- une cuve de clarification (2) sous la cuve d'homogénéisation(1),
- un bac de floculation (3) comprenant une partie supérieure tronconique (31) prolongée d'une partie inférieure, placé à l'intérieur de la cuve de clarification (2) et dans lequel des flocons de boues sont destinés à se former,
- un conduit (6) disposé dans l'axe (ZZ), descendant, reliant la cuve d'homogénéisation (1) à la partie basse du bac de floculation (3) que l'effluent est destiné à traverser de bas en haut et il est destiné à se clarifier au contact des flocons de boues,
- le conduit (6) comprenant un tube supérieur dont une extrémité débouche dans la cuve d'homogénéisation et l'autre extrémité débouche dans un tube inférieur de diamètre plus grand que celui du tube supérieur, l'extrémité inférieure de celui-ci débouchant dans la partie basse du bac de floculation,
- la partie inférieure de la cuvé de clarification ayant une partie tronconique formant la cuve à boues (4) destinée à recevoir les boues destinées à déborder du bac de floculation (3),
- une cuve annulaire entourant la cuve de clarification et destinée à recevoir l'eau filtrée par surverse de la cuve de clarification (2), dans laquelle
- la cuve d'homogénéisation (1) comporte une arrivée tangentielle (91) de l'effluent,
**caracterisée en ce que**
- l'entrée (611) et la sortie (612) du tube supérieur (61) comportent un guide hélicoïdal (613, 614) de mise en rotation de l'effluent,
- le tube inférieur (62) de diamètre supérieur à celui du tube supérieur (61) se termine par une sortie en forme de cône renversé (622) de section réduite (621),
- la partie inférieure (32) du bac de floculation (3) est tronconique, d'angle au sommet, inférieur à celui de sa partie supérieure (31), cette partie inférieure (32) étant parallèle au cône de la sortie du tube inférieur (62), et
- au moins un cône anti-refoulement (7, 8) entoure le conduit (6) dans la cuve de clarification (2).

2. Installation selon la revendication 1,
**caractérisée par**
un second cône anti-refoulement (8) disposé au-dessus de la cuve de floculation (3).

3. Installation selon la revendication 1,
**caractérisée en ce que**
- la sortie de la cuve de clarification (2) comporte des chicanes (24) de stabilisation du liquide et une répartition périphérique d'orifices de sortie (23),
- la cuve annulaire (5) entourant la cuve de clarification (2) contient une masse filtrante (511) en partie supérieure (51), sa partie inférieure (52) constituant le volume de stockage de l'eau filtrée.

4. Installation selon la revendication 1,
**caractérisée en ce que**
la conicité de la partie supérieure (31) de la cuve de floculation (3) est supérieure à celle de sa partie inférieure (32).

5. Installation selon la revendication 1,
**caractérisée en ce que**
le tube inférieur (62A) est en forme de deux troncs de cône (62A, 622) assemblés par leur grande base, la section d'entrée correspondant à celle du tube supérieur (61) pour aller en s'évasant et un moyen d'injection (624) destiné à injecter un agent floculant au milieu de ce volume.

6. Installation selon la revendication 1,
**caractérisée par**
un moyen de dosage (93) du ou des réactifs en amont de la cuve d'homogénéisation (1) et ce moyen de dosage est suivi d'un mélangeur statique (94).

7. Installation selon la revendication 1,
**caractérisée en ce que**
la cuve annulaire (5) se compose d'une partie inférieure (51A) entourant la partie inférieure (22) de la cuve de clarification (2) et une partie supérieure (51A) contenant la masse filtrante (511A) installée au-dessus et dans le prolongement de la cuve de clarification (2) et ayant la même paroi extérieure (54A), ces deux parties étant reliées par une conduite, un canal annulaire (211) entourant le conduit (6) pour relier le volume supérieur (21) de la cuve de clarification (2) à des rampes de ruissellement (27A) débouchant au-dessus de la masse filtrante (511A).

8. Installation selon la revendication 8,
**caractérisée par**
une chambre collectrice (213) qui sépare la partie supérieure (51A) du volume supérieur (21) de la cuve de clarification (2),
cette chambre collectrice (213) étant reliée à la partie inférieure (52A) par une conduite munie d'une vanne (215).

9. Installation selon la revendication 1,
**caractérisée par**
une cuve de pré-traitement (11) annulaire, entourant la cuve externe (5), et composée d'un volume inférieur (113) dans lequel arrive l'effluent additionné d'un agent coagulant et/ou floculant pour y déposer les flocons de boues et d'un volume supérieur (112) dans lequel remonte le liquide partiellement clarifié pour être transféré dans la cuve de répartition (13).

10. Installation selon la revendication 9,
**caractérisée en ce que**
la cuve de pré-traitement (11) annulaire comporte un bac de floculation (115) formé d'un plateau annulaire (115A) muni de cavités tronconiques (115B) bordées d'orifices de passage (115C), une conduite (116) venant d'une chambre de répartition d'effluent (113) débouchant dans chaque cavité (115B), et le volume inférieur est bordé par un fond (114) en forme de couronne annulaire constituant la cuve de stockage de boues (114).

11. Installation selon la revendication 9,
**caractérisée en ce que**
le volume inférieur (113) de la cuve (111) est séparé de son volume supérieur (112) par une cloison (118) munie d'orifices (119) dont l'entrée est délimitée par des cônes divergents (119A), ces orifices (119) étant décalés angulairement par rapport à la position angulaire des cavités de floculation (115B) pour occuper chaque fois une position intermédiaire.

12. Installation selon la revendication 1,
**caractérisée en ce qu'**
elle comprend une partie complémentaire (200) de traitement bactériologique composée d'une succession de chambres annulaires (201, 202, 203) entourant la cuve externe (11) et recevant le liquide nettoyé qui traverse,
ces chambres (201, 202, 203) reliées en cascade par des conduites de communication (205, 206, 207), étant munies de guides hélicoïdaux (210) de mise en rotation de la veine de liquide et des particules en suspension constituant la charge de chaque chambre,
les conduites de communication (205, 206, 207) étant des tubes en forme de U dont la branche d'entrée (205E) est tournée vers l'aval dans la chambre amont pour déboucher par une sortie (205S) tournée vers l'aval dans la chambre annulaire suivante, selon le sens de circulation du liquide dans ces chambres.

13. Installation selon la revendication 12,
**caractérisée en ce que**
la branche de sortie (205S) de la conduite de communication (205, 206, 207) comporte un guide hélicoïdal (211).

## Patentansprüche

1. Abwasserreinigungsanlage mit zentralisierter Struktur, die auf einer vertikalen Achse (ZZ) Folgendes umfasst:
- ein Homogenisierungsbecken (1), das dazu bestimmt ist, das mit einem Koagulier- oder Flockungsmittel versetzte Abwasser aufzunehmen,
- ein Klärbecken (2) unter dem Homogenisierungsbecken (1),
- einen Flockungsbehälter (3), der einen oberen kegelstumpfförmigen Teil (31), der durch einen unteren Teil verlängert wird, umfasst und der im Inneren des Klärbeckens (2) angeordnet ist und der dazu bestimmt ist, dass sich in ihm Schlammflocken bilden,
- eine in der Achse (ZZ) angeordnete absteigende Leitung (6), die das Homogenisierungsbecken (1) mit dem unteren Teil des Flockungsbehälters (3) verbindet, den das Abwasser von unten nach oben durchströmt, das sich durch den Kontakt mit den Schlammflocken klären soll,
- wobei die Leitung (6) ein oberes Rohr umfasst, dessen eines Ende im Homogenisierungsbecken mündet und dessen anderes Ende in einem unteren Rohr mündet, dessen Durchmesser größer ist als jener des oberen Rohres und dessen unteres Ende im unteren Teil des Flockungsbehälters mündet,
- wobei der untere Teil des Klärbeckens einen kegelstumpfförmigen Teil aufweist, der das Schlammbecken (4) bildet, das dazu bestimmt ist, den Schlamm aufzunehmen, der dazu bestimmt ist, vom Flockungsbehälter (3) her überzulaufen,
- ein ringförmiges Becken, welches das Klärbecken umgibt und dazu bestimmt ist, das durch Überlauf gefilterte Wasser vom Klärbecken (2) aufzunehmen,
- wobei das Homogenisierungsbecken (1) einen tangentialen Abwasserzufluss (91) aufweist,
**dadurch gekennzeichnet, dass**
- der Einlass (611) und der Auslass (612) des oberen Rohres (61) eine schneckenförmige Führung (613, 614) umfassen, um das Abwasser in Rotation zu versetzen,
- das untere Rohr (62), dessen Durchmesser größer ist als jener des oberen Rohres (61), durch einen Auslass in Form eines umgekehrten Kegels (622) mit verringertem Querschnitt (621) endet,
- der untere Teil (32) des Flockungsbehälters (3) kegelstumpfförmig ist und einen kleineren Kegelwinkel als der obere Teil (31) aufweist, wobei der untere Teil (32) parallel zum Kegel des Auslasses des unteren Rohres (62) ist, und
- wenigstens ein Rückflussverhinderungskegel (7, 8) die Leitung (6) im Klärbecken (2) umgibt.

2. Anlage nach Anspruch 1,
**gekennzeichnet durch**
einen zweiten Rückflussverhinderungskegel (8), der über dem Flockungsbecken (3) angeordnet ist.

3. Anlage nach Anspruch 1,
**dadurch gekennzeichnet, dass**
- der Auslass des Klärbeckens (2) Ablenkplatten (24) zur Stabilisierung der Flüssigkeit und in Umfangsrichtung verteilte Auslassöffnungen (23) aufweist,
- das ringförmige Becken (5), welches das Klärbecken (2) umgibt, im oberen Teil (51) eine Filtriermasse (511) enthält, wobei sein unterer Teil (52) das Volumen zur Aufbewahrung des gefilterten Wassers bildet.

4. Anlage nach Anspruch 1,
**dadurch gekennzeichnet, dass**
die Konizität des oberen Teils (31) des Flockungsbeckens (3) größer ist als jene seines unteren Teils (32).

5. Anlage nach Anspruch 1,
**dadurch gekennzeichnet, dass**
das untere Rohr (62A) die Form von zwei Kegelstümpfen (62A, 622) aufweist, die durch ihre große Basis aneinandergefügt sind, wobei der Einlassquerschnitt jenem des oberen Rohres (61) entspricht, um anschließend weiter zu werden, wobei eine Einspritzvorrichtung (624) vorgesehen ist, das dazu bestimmt ist, ein Flockungsmittel in dieses Volumen einzuspritzen.

6. Anlage nach Anspruch 1,
**gekennzeichnet durch**
ein Mittel zur Dosierung (93) des Reagens oder der Reagenzien stromaufwärts vom Homogenisierungsbecken (1), wobei auf dieses Dosierungsmittel ein statischer Mischer (94) folgt.

7. Anlage nach Anspruch 1,
**dadurch gekennzeichnet, dass**
das ringförmige Becken (5) aus Folgendem gebildet wird: aus einem unteren Teil (51A), der den unteren Teil (22) des Klärbeckens (2) umgibt, und einem oberen Teil (51A), der die Filtriermasse (511A) enthält und der über und in der Verlängerung des Klärbeckens (2) angeordnet ist und der die gleiche Außenwand (54A) aufweist, wobei diese beiden Teile durch eine Rohrleitung miteinander verbunden sind,
wobei ein ringförmiger Kanal (211) die Leitung (6) umgibt, um das obere Volumen (21) des Klärbeckens (2) mit Rieselrampen (27A) zu verbinden, die oberhalb der Filtriermasse (511A) münden.

8. Anlage nach Anspruch 8,
**gekennzeichnet durch**
eine Sammelkammer (213), die den oberen Teil (51A) vom oberen Volumen (21) des Klärbeckens (2) trennt,
wobei diese Sammelkammer (213) durch eine mit einem Schieber (215) versehene Rohrleitung mit dem unteren Teil (52A) verbunden ist.

9. Anlage nach Anspruch 1,
**gekennzeichnet durch**
ein ringförmiges Vorbehandlungsbecken (11), welches das äußere Becken (5) umgibt und aus Folgendem gebildet ist: aus einem unteren Volumen (113), in dem das mit einem Koagulier- und/oder Flockungsmittel versetzte Abwasser eintrifft, um hier Schlammflocken abzusetzen, und aus einem oberen Volumen (112), in das die teilweise geklärte Flüssigkeit aufsteigt, um in das Verteilungsbecken (13) geleitet zu werden.

10. Anlage nach Anspruch 9,
**dadurch gekennzeichnet, dass**
das ringförmige Vorbehandlungsbecken (11) einen Flockungsbehälter (115) umfasst, der aus einer ringförmigen Platte (115A) gebildet ist, die mit kegelstumpfförmigen Hohlräumen (115B) versehen ist, die von Durchlassöffnungen (115C) umgeben sind, wobei eine von einer Abwasserverteilungskammer (113) kommende Rohrleitung (116) in jeden Hohlraum (115B) mündet und wobei das untere Volumen durch einen Boden (114) in Form eines ringförmigen Kranzes begrenzt wird, der das Schlammlagerungsbecken (114) bildet.

11. Anlage nach Anspruch 9,
**dadurch gekennzeichnet, dass**
das unteren Volumen (113) des Beckens (111) von seinem oberen Volumen (112) durch eine Trennwand (118) getrennt ist, die mit Öffnungen (119) versehen ist, deren Einlass durch auseinanderlaufende Kegel (119A) begrenzt wird, wobei diese Öffnungen (119) in Bezug auf die Winkelposition der Flockungshohlräume (115B) winkelversetzt sind, so dass sie jeweils eine Zwischenposition einnehmen.

12. Anlage nach Anspruch 1,
**dadurch gekennzeichnet, dass**
sie einen zusätzlichen Teil (200) zur bakteriologischen Behandlung umfasst, der aus einer Aufeinanderfolge von ringförmigen Kammern (201, 202, 203) gebildet ist, die das äußere Becken (11) umgeben und die gereinigte Flüssigkeit aufnehmen, die diese Kammern (201, 202, 203) durchströmt, die kaskadenartig durch Verbindungsleitungen (205, 206, 207) verbunden sind, die mit schneckenförmigen Führungen (210) versehen sind, um den Flüssigkeitsstrom und die darin suspendierten Partikel in Rotation zu versetzen, die die Beladung jeder Kammer bilden,
wobei die Verbindungsleitungen (205, 206, 207) U-förmige Rohre sind, deren Einlass-Ast (205E) in der stromaufwärtigen Kammer stromabwärts gerichtet ist, um durch einen stromabwärts gerichteten Auslass (205S) in die folgende ringförmige Kammer zu münden, und zwar jeweils bezogen auf die Richtung der Zirkulation der Flüssigkeit in diesen Kammern.

13. Anlage nach Anspruch 12,
**dadurch gekennzeichnet, dass**
der Auslass-Ast (205S) der Verbindungsleitung (205, 206, 207) eine schneckenförmige Führung (211) umfasst.

## Claims

1. Effluent purifying plant having a centralised structure, comprising, on a vertical axis (ZZ),
- a homogenisation vessel (1) which is to receive the effluent supplemented with a coagulating or flocculating agent,
- a clarification vessel (2) beneath the homogenisation vessel (1),
- a flocculation tank (3) comprising a tapered upper portion (31) extended by a lower portion, which tank is situated inside the clarification vessel (2) and in which sludge flakes are to form,
- a descending pipe (6) arranged in the axis (ZZ) and connecting the homogenisation vessel (1) to the lower portion of the flocculation tank (3) through which the effluent is to pass from bottom to top and is to be clarified in contact with the sludge flakes,
- the pipe (6) comprising an upper tube, one end of which opens into the homogenisation vessel and the other end of which opens into a lower tube having a larger diameter than that of the upper tube, the lower end thereof opening into the lower portion of the flocculation tank,
- the lower portion of the clarification vessel having a tapered portion forming the sludge vessel (4) which is to receive the sludge which is to overflow from the flocculation tank (3),
- an annular vessel which surrounds the clarification vessel and is to receive the filtered water by overflow from the clarification vessel (2),
wherein
- the homogenisation vessel (1) comprises a tangential intake (91) for the effluent, **characterised in that**
- the inlet (611) and the outlet (612) of the upper tube (61) comprise a helical guide (613, 614) for setting the effluent in rotation,
- the lower tube (62) having a larger diameter than that of the upper tube (61) terminates in an outlet in the form of an inverted cone (622) of reduced cross-section (621),
- the lower portion (32) of the flocculation tank (3) is tapered, with an apex angle smaller than that of its upper portion (31), the lower portion (32) being parallel to the cone of the outlet of the lower tube (62), and
- at least one anti-backflow cone (7, 8) surrounds the pipe (6) in the clarification vessel (2).

2. Plant according to claim 1,
**characterised by**
a second anti-backflow cone (8) arranged above the flocculation vessel (3).

3. Plant according to claim 1,
**characterised in that**
- the outlet of the clarification vessel (2) comprises baffles (24) for stabilising the liquid and a peripheral distribution of outlet orifices (23),
- the annular vessel (5) surrounding the clarification vessel (2) contains a filter mass (511) in the upper portion (51), its lower portion (52) constituting the storage volume for the filtered water.

4. Plant according to claim 1,
**characterised in that**
the amount of taper of the upper portion (31) of the flocculation vessel (3) is greater than that of its lower portion (32).

5. Plant according to claim 1,
**characterised in that**
the lower tube (62A) is in the form of two truncated cones (62A, 622) assembled by their large bases, the inlet cross-section corresponding to that of the upper tube (61) and then opening out, and an injection means (624) which is to inject a flocculating agent into the middle of that volume.

6. Plant according to claim 1,
**characterised by**
a metering means (93) for metering in the reagent(s) upstream of the homogenisation vessel (1), and the metering means is followed by a static mixer (94).

7. Plant according to claim 1,
**characterised in that**
the annular vessel (5) is composed of a lower portion (51A) surrounding the lower portion (22) of the clarification vessel (2), and an upper portion (51A) which contains the filter mass (511A) and is mounted above and as a continuation of the clarification vessel (2) and which has the same outside wall (54A), these two portions being connected by a pipe, an annular channel (211) surrounding the pipe (6) in order to connect the upper volume (21) of the clarification vessel (2) to run-off ramps (27A) which emerge above the filter mass (511A).

8. Plant according to claim 8,
**characterised by**
a collection chamber (213) which separates the upper portion (51A) of the upper volume (21) from the clarification vessel (2),
the collection chamber (213) being connected to the lower portion (52A) by a pipe equipped with a valve (215).

9. Plant according to claim 1,
**characterised by**
an annular pretreatment vessel (11) which surrounds the outer vessel (5) and is composed of a lower volume (113), in which the effluent supplemented with a coagulating and/or flocculating agent arrives in order to deposit the sludge flakes therein, and an upper volume (112) in which the partially clarified liquid rises in order to be transferred to the distribution vessel (13).

10. Plant according to claim 9,
**characterised in that**
the annular pretreatment vessel (11) comprises a flocculation tank (115) formed by an annular plate (115A) equipped with tapered cavities (115B) bordered by passage openings (115C), a pipe (116) coming from an effluent distribution chamber (113) opening into each cavity (115B), and the lower volume is bordered by a base (114) in the form of an annular collar constituting the sludge storage vessel (114).

11. Plant according to claim 9,
**characterised in that**
the lower volume (113) of the vessel (111) is separated from its upper volume (112) by a partition (118) provided with openings (119), the inlet of which is delimited by divergent cones (119A), the openings (119) being offset angularly with respect to the angular position of the flocculation cavities (115B) in order to occupy an intermediate position each time.

12. Plant according to claim 1,
**characterised in that**
it comprises an additional bacteriological treatment portion (200) composed of a series of annular chambers (201, 202, 203) which surround the outer vessel (11) and receive the purified liquid passing through,
the chambers (201, 202, 203), which are connected in a cascade by communication pipes (205, 206, 207), being provided with helical guides (210) for setting in rotation the stream of liquid and particles in suspension constituting the charge of each chamber,
the communication pipes (205, 206, 207) being U-shaped tubes, the inlet branch (205E) of which faces downstream in the upstream chamber in order to open at an outlet (205S) facing downstream in the following annular chamber, according to the direction of flow of the liquid in the chambers.

13. Plant according to claim 12,
**characterised in that**
the outlet branch (205S) of the communication pipe (205, 206, 207) comprises a helical guide (211).
